# EUROPÄISCHE PATENTSCHRIFT

(11) **EP 1 539 543 B1**
(45) Veröffentlichungstag und Bekanntmachung des Hinweises auf die Patenterteilung: **22.08.2007**
(21) Anmeldenummer: 03797304.7
(22) Anmeldetag: 16.09.2003
(51) Int. Cl.: B60R 21/13

(54) **ÜBERROLLSCHUTZSYSTEM FÜR KRAFTFAHRZEUGE**
ROLLOVER PROTECTION SYSTEM FOR MOTOR VEHICLES
SYSTEME DE PROTECTION EN CAS DE TONNEAUX POUR VEHICULES AUTOMOBILES

(30) Priorität: 17.09.2002 DE 10242832; 04.10.2002 DE 20215275 U; 04.10.2002 DE 20215276 U
(43) Veröffentlichungstag der Anmeldung: 15.06.2005
(73) Patentinhaber: ISE Innomotive Systems Europe GmbH, 51693 Bergneustadt (DE)
(72) Erfinder: BERGES, Stephan, 51647 Gummersbach (DE); JANISCH, Mirko, 53797 Lomahr (DE); NOWACK, Reinhard, 57489 Drolshagen (DE)
(74) Vertreter: Fuchs
(86) Internationale Anmeldenummer: PCT/EP2003/010267
(87) Internationale Veröffentlichungsnummer: WO 2004/026628

(56) Entgegenhaltungen:
- EP-A- 0 504 482
- EP-A- 0 752 344
- EP-A- 0 802 087
- EP-A- 1 067 026

## Beschreibung

Die Erfindung bezieht sich auf ein Überrollschutzsystem für Kraftfahrzeuge, das jeweils einem Fahrzeugsitz zugeordnet ist gemäß dem Oberbegriff des Ansprüche 1 oder 2.

Überrollschutzsysteme für Kraftfahrzeuge sind in mannigfaltigen Ausführungsformen bekannt geworden.

Derartige Überrolischutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens bei Cabriolets.

Am Markt gewinnen daher immer mehr konstruktive Lösungen Bedeutung, bei denen der Überrollbügel im Normalzustand eingefahren ist, und im Gefahrenfall, also bei einem drohenden Überschlag, schnell in eine schützende Position ausgefahren wird, um zu verhindern, dass die Fahrzeuginsassen durch das sich überschlagende Fahrzeug erdrückt werden.

Diese Lösungen weisen typischerweise für jeden Fahrzeugsitz einen in einem fahrzeugfesten Kassetten-Gehäuse geführten U-förmigen oder aus einem Profilkörper gebildeten Überrollkörper, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken des Überrollbügels in die Kassette verhindert.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied, gebildet ist.

Die Verriegelungseinrichtung besteht typischerweise aus einer schwenkbar angelenkten, federvorgespannten Rastklinke mit Zahnsegmenten und einer feststehenden Zahnleiste, einem Rastdorn oder dergleichen, wobei ein Verriegelungs-Element mit dem Überrollkörper und das andere fahrzeugfest verbunden ist.

Eine derartige Kassetten-Konstruktion eines Überrollschutzsystems zeigt beispielsweise die DE 100 40 649 C1, die als Überrollkörper einen U-förmigen Überrollbügel aufweist. Dieser Überrollbügel besteht typischerweise aus zwei Komponenten, den beiden, einen Basiskörper bildenden Schenkelrohren, die in der Kassette geführt sind, und dem Bügelkopf, auch Querjoch genannt, der ebenfalls rohrförmig sein kann, und über den die Schenkelrohre kopfseitig U-förmig miteinander verbunden sind.

Eine alternative Kassettenkonstruktion mit einem Überrollkörper in Form eines Profilkörpers zeigt insbesondere die DE 198 38 989 C1.

Bei den bekannten U-förmigen Überrollbügeln bestehen die Schenkelrohre und der Bügelkopf aus Stahlrohren, die miteinander verschweißt d.h. stoffschlüssig miteinander verbunden sind. Es sind auch U-förmige Überrollbügel bekannt, deren Komponenten aus Aluminiumrohren bestehen, die ebenfalls miteinander verschweißt sind.

In vergleichbarer Weise ist bei der alternativen Kassettenkonstruktion der breite Profilkörper mit dem Überrollkopf verschweißt.

Weil sich nur im wesentlichen gleiche Werkstoffe miteinander unter Erfüllung der hohen Fertigkeitsspezifikationen gut verschweißen lassen, ist es mit der Schweiß-Verbindungstechnik nach dem Stand der Technik nicht möglich, die Komponenten des Überrollkörpers, d.h. den Basiskörper und den Überrollkopf, aus unterschiedlichen Werkstoffen herzustellen. Selbst wenn die Komponenten aus demselben Werkstofftyp hergestellt sind, aber unterschiedliche Werkstoffdaten, insbesondere hinsichtlich der Festigkeit, aufweisen, gibt es enge Grenzen in der Variationsmöglichkeit der Werkstoffdaten.

Zur Erreichung von vorgegebenen Eigenschaften des Überrollbügels bezüglich Festigkeit, Dehnung, Deformierbarkeit, insbesondere zur Energieabsorption, usw., d.h. zur Erzielung eines vorgegebenen Weg/Kraft-Verlaufes bei Last, ist es jedoch wünschenswert, für den Basiskörper und den Überrollkopf angepasste, unterschiedliche Werkstoffe verwenden zu können.

Der Erfindung liegt die Aufgabe zugrunde, das eingangs bezeichnete Überrollschutzsystem hinsichtlich des Überrollkörpers so auszubilden, dass dessen Komponenten Basiskörper und Überrollkopf aus unterschiedlichen Werkstoffen bestehen sowie unterschiedlichen Fertigungs-Verfahren entstammen können und dabei dennoch mechanisch sicher miteinander verbunden werden können.

Die Lösung dieser Aufgabe gelingt bei einem Überrollschutzsystem für Kraftfahrzeuge, das jeweils einem Fahrzeugsitz zugeordnet ist, durch die Lehre des Anspruches 1 oder des Anspruches 2.

Durch die direkte form- und/oder kraftschlüssige Verbindung anstelle einer stoffschlüssigen Verbindung der Komponenten des Überrollkörpers ist es daher möglich, zur Absicherung des Überlebensraumes bei einem Überschlag und zum Abbau von Lastspitzen bei einem Überschlag, die Komponenten des Überrollkörpers aus verschiedenen Werkstoffen je nach Anforderungen an Festigkeit, Deformierbarkeit, etc. herzustellen. und mechanisch fest miteinander zu verbinden. Erfindungsgemäss werden so die Werkstoffe so gewählt, dass starre, d.h. feste und wenig elastische Basiskörper mit einem definiert verformbaren, d.h. nachgiebigen Überrollkopf, miteinander verbunden sind.

Es sind damit mit großem Vorteil Zusammenpaarungen von Überrollkörperkomponenten möglich, die bislang wegen ihrer Nichtverschweißbarkeit ausgeschlossen waren.

Durch die kraft- und/oder formschlüssige Verbindung der Komponenten des Überrollkörpers sind auch neue Materialkombinationen möglich. Beispielsweise kann der Basiskörper aus Aluminium, oder Stahl, oder einem faserverstärkten Kunststoff (GFK oder CFK) bestehen und mit einem Überrollkopf verbunden werden, der alternativ ein gebogenes Stahlrohr bzw. Aluminiumrohr, oder ein metallisches Druckguss- oder - Schmiedeteil oder ein faserverstärktes Kunststoffteil sein kann. Es sind daher auch materialmäßig sogenannte Hybrid-Überrollkörper möglich.

Durch den nunmehr möglichen Einsatz von verschiedenen Fertigungsverfahren für die Herstellung des Überrollkopfes, z.B. Kaltverformung von Rohren, Schmieden, Gießen, Spritzen, etc. sind Überrollköpfe mit besonderer Formgebung herstellbar, z.B. angepasst an Forderungen der wegbegrenzten Deformierbarkeit des Kopfes. Dabei sind auch unterschiedliche Farbkombinationen von Basiskörper und Überrollkopf möglich.

Für das form- und/oder kraftschlüssige Verbinden des Basiskörpers mit dem Überrollkopf kommen je nach Ausbildung dieser Komponenten sowie je nach dem Werkstoff, aus dem sie bestehen, verschiedene Verfahren in Frage.

Eine erste, sehr vorteilhafte Möglichkeit besteht darin, die vorgesehenen Komponenten miteinander zu verschrauben. Diese Verbindungsart ist insbesondere von Vorteil bei U-förmigen Überrollbügeln, wobei die Verschraubung dann vorzugsweise so getroffen ist, dass die Verbindungsstellen der Enden der Schenkelrohre einerseits und die des gerundeten Bügelkopfes andererseits zueinander komplementäre Gewindeausbildungen aufweisen, über welche die Enden der Schenkelrohre direkt stirnseitig mit den Verbindungsenden des gerundeten Bügelkopfes miteinander verschraubt sind.

Das Verschrauben von Komponenten eines Überrollbügels ist an sich durch die DE 197 12 955 A1 bekannt. Im bekannten Fall handelt es sich jedoch um einen sich quer über die gesamte Fahrzeugbreite erstreckenden Überrollbügel, der ein leicht gewölbtes Querjoch aus einem U-förmigen Profilkörper besitzt. Die beiden Enden des Querjoches besitzen im Verbindungssteg des U-förmigen Profilkörpers eine Bohrung, und die zugehörigen Schenkelrohre des Überrollbügels weisen oben eine Gewindebuchse auf. Mittels zweier Schrauben, deren Gewindeabschnitt jeweils die Bohrung im Querjoch durchdringt und jeweils mit der zugehörigen Gewindebuchse in Wirkeingriff gebracht wird, wird das Querjoch mit den beiden Schenkelrohren verschraubt, und zwar derart, dass zwischen beiden Komponenten eine begrenzte Beweglichkeit verbleibt, um ein Verkanten des sehr breiten Überrollbügels beim Ein- und Ausfahren zu vermeiden.

Diese Schraub-Konstruktion ist auf die langen, die Wagenbreite überspannenden, ausfahrbaren Überrollbügel abgestellt, um eine gewisse Spielfreiheit in der Verbindung von Querjoch und Schenkelrohren zu schaffen, damit die für überbreite Überrollbügel typischen Verkantungsprobleme aufgefangen werden können.

Die Erfindung wendet sich jedoch an solche Überrollschutzsysteme, die jedem Fahrzeugsitz einzeln zugeordnet sind. Da die U-förmigen Überrollbügel in diesen Fällen relativ schmal sind, besitzen sie einmal einen stark gerundeten, U-förmigen Bügelkopf und haben zum anderen nicht die Verkantungsprobleme der überbreiten Überrollbügel. Die beiden Enden des Bügelkopfes sind daher bei den Fahrzeugsitzindividuellen Überrollbügelsystemen fest, d.h. starr mit den Schenkelrohren verbunden. Dabei stehen die Materialauswahl und die Vorgabe eines Weg-/Kraft-Verlaufs bei Belastung im Vordergrund, was im bekannten Fall nicht gegeben ist.

Das Verschrauben eines im Querschnitt pilzhutförmigen Bügelkopfes mit seinen Schenkeln ist auch bei fahrzeugsitzbezogenen Überrollbügelsystemen durch die EP-A-0 505 482 bekannt geworden. Im bekannten Fall liegen die Verbindungsstellen des Bügelkopfes nicht an den Enden des pilzhutförmig gerundeten Bügelkopfes, sondern im verbindenden Joch. Seitlich auf den Hut des Bügelkopfes auftreffende Kräfte werden daher nicht direkt in die Schenkel eingeleitet.

Im Fall der bekannten Verschraubung ist somit keine direkte stirnseitige Verbindung der Verbindungsenden von Bügelkopf und Basiskörper vorgesehen. Auch geht es dort um eine andere technische Problemstellung als im Fall der Erfindung, bei der es darauf ankommt, für den Basiskörper und den Bügelkopf angepasste unterschiedliche Werkstoffe verwenden zu können.

Die EP-A-1 067 026 zeigt ein starres Überrollbügelsystem mit einem U-förmigen Bügelkopf aus einem spröden Werkstoff, der über stirnseitig vorgesehene Deformationselemente mit einem karosseriefesten Querträger verbunden ist.

Die Schenkelenden des Bügelkopfes können dabei mit den Deformationselementen verschraubt oder verklebt sein. Die Deformationselemente sollen dabei im Belastungsfall sich so weit verformen, dass ein Bruch des spröden Bügelkopfes sicher vermieden wird. Auch dieses Dokument unterscheidet sich daher maßgebend sowohl hinsichtlich der Aufgabenstellung und der Lösung von der Erfindung.

Die Verschraubung des Überrollkopfes mit dem Basiskörper führt mit Vorteil auch zu einer Austauschbarkeit des Überrollkopfes. Dadurch ist beispielsweise ein Wechsel, ein Austausch des Überrollkopfes bei Beschädigung möglich, was insbesondere dann von Vorteil ist, wenn der Überrollkopf umschäumt, lackiert oder beflochten ist, weil diese Umkleidungen betrieblichen Abnutzungen unterliegen.

Je nach der Konfiguration des Bügelkopfes und der verwendeten Materialien für Schenkelrohre und Bügelkopf sind bei U-förmigen Überrollbügeln verschiedene Ausbildungen der Schraubverbindung möglich.

Bei einem Bügelkopf mit stutzenartig hervorstehenden Verbindungsstellen ist diese Ausbildung gemäß einer Ausgestaltung der Erfindung vorteilhaft so getroffen, dass die Verbindungs-Enden der Bügel-Schenkelrohre ein Innengewinde und die Verbindungsstellen am Bügelkopf ein dazu komplementäres Außengewinde aufweisen. Diese Ausführungsform ermöglicht eine einfache Realisierung der Gewindeabschnitte.

Alternativ dazu kann die Gewindeausbildung auch so getroffen sein, dass an den Verbindungs-Enden der Bügelschenkelrohre jeweils ein Außengewinde oder ein Gewindezapfen mit einem Durchmesser kleiner als der der Bügel-Schenkelrohre angebracht ist, und die Verbindungsstellen am Bügelkopf jeweils ein komplementäres Innengewinde bzw. eine zum Gewindezapfen komplementäre Gewindebohrung aufweisen. Hierbei ist allerdings für die zweite Variante die Herstellung eines Gewindezapfens und seine Befestigung im jeweiligen Schenkelrohr notwendig.

Bei faserverstärkten Bügelkomponenten sind vorzugsweise metallische Gewindeteile eingearbeitet, z.B. metallische Gewindebuchsen im Bügelkopf bzw. Basiskörper.

Eine weitere Möglichkeit der erfindungsgemäßen Verbindung der Komponenten des Überrollkörpers besteht gemäß einer Ausgestaltung der Erfindung darin, dass der Überrollkopf mit dem Basiskörper verklebt ist. Bei U-förmigen Überrollbügeln mit Schenkelrohren und Bügelkopf ist die Verklebung dabei so getroffen, dass die Verbindungs-Enden der Schenkelrohre jeweils mit dem Bügelkopf über zugehörige Verbindungsstellen verklebt sind.

Je nach der Konfiguration des Bügelkopfes und der verwendeten Materialien für Schenkelrohre und Bügelkopf sind verschiedene Ausbildungen der Klebeverbindung möglich.

Zweckmäßig besitzt der Bügelkopf stutzenartig hervorstehende Verbindungsstellen mit einem an den Innendurchmesser der Schenkelrohre angepassten Außendurchmesser, so dass die Verbindungs-Enden der Schenkelrohre die Verbindungsstellen am Bügelkopf aufnehmen. Bei dieser Ausführungsform kann der Bügelkopf bündig mit den Schenkelrohren verklebt werden.

Als Klebstoff findet vorzugsweise ein Cyanolit-Kleber Anwendung, aber auch andere geeignete Klebstoffe können eingesetzt werden.

Eine weitere Möglichkeit der erfindungsgemäßen Verbindung der Komponenten des Überrollkörpers besteht gemäß einer weiteren Ausgestaltung der Erfindung darin, dass der Überrollkopf mit dem Basiskörper formschlüssig verbunden ist.

Bei einem dreiteiligen Überrollbügel, bestehend aus zwei Schenkelrohren, die am einen Ende über einen gerundeten Bügelkopf mechanisch miteinander U-förmig verbunden sind, ist gemäß einer Ausgestaltung der Erfindung die Verbindung so getroffen, dass die Verbindungs-Enden der Schenkelrohre jeweils mit dem Bügelkopf über zugehörige Verbindungsstellen formschlüssig verbunden sind.

Je nach der Konfiguration des Bügelkopfes und der verwendeten Materialien für Schenkelrohre und Bügelkopf sind verschiedene Ausbildungen der formschlüssigen Verbindung möglich, z.B. durch Prägen. So können beispielsweise die Verbindungsstellen am Bügelkopf eine umlaufende Nut aufweisen, in die die Wandung der Verbindungsenden unter Schaffung eines Formschlusses eingeprägt ist, wobei die Nut vorzugsweise rillenförmig ausgebildet ist.

Es ist auch denkbar, den Überrollkopf mit dem Basiskörper sowohl zu verkleben als auch formschlüssig zu verbinden, was sich insbesondere beim Verbinden eines GfK-Körpers mit einem metallischen Profil-Basiskörper anbietet.

Formschlüssige Verbindungen bei einem Überrollbügelsystem sind an sich bekannt.

So zeigt die EP-A-0 752 344 einen ausfahrbaren Überrollbügel bestehend aus einem Profilkörper mit zwei parallel verlaufenden Bügelschenkeln und einem diese verbindenden Steg. In Höhe der zugehörigen Kopfstütze weist der Profilkörper eine Bügelabdeckung aus Kunststoff auf, die mit einer kopfseitig auf dem Profilkörper angebrachten Verstärkung formschlüssig verbunden ist. Diese Bügelabdeckung ist jedoch kein Bügelkopf, sondern eine die Kopfseite des Profilkörpers verkleidende, an die Innenausstattung des Wagens angepasste kappenförmige Umhüllung, die keine Überschlagskräfte aufnehmen kann.

Weitere Ausgestaltungen der Erfindung sind in weiteren Unteransprüchen gekennzeichnet und ergeben sich auch anhand der Beschreibung von in den Zeichnungen in verschiedenen Ansichten und Ausschnitten dargestellten Ausführungsbeispielen der Erfindung.

Es zeigen:
- Figur 1: eine perspektivische Darstellung eines Überrollschutzsystems in Kassettenbauweise, bei dem ein U-förmiger Überrollbügel, der aus drei form- und/oder kraftschlüssig miteinander verbundenen Komponenten, zusammengesetzt ist, verwendet wird
- Figur 2: in einerAusschnitt-Darstellung aus Fig. 1 den näheren Aufbau des Überrollbügels mit verschraubten Komponenten
- Figur 3: die mit dem erfindungsgemäßen Überrollbügel beispielhaft erzielbare Kraft-Weg-Kurve,
- Figur 4: in einer Explosions-Ausschnitt-Darstellung aus Fig. 1 den näheren Aufbau des Überrollbügels, zusammengeklebt aus drei Komponenten,
- Figur 5: den Überrollbügel nach Fig. 4 in verklebtem Zustand,
- Figur 6: in einer Ausschnitt-Darstellung aus Fig. 1 den näheren Aufbau des Überrollbügels vor einer formschlüssigen Verbindung seiner Komponenten,
- Figur 7: eine Darstellung entsprechend Fig. 6 nach Anbringung der formschlüssigen Verbindung,
- Figur 8: in einer isometrischen Darstellung eine alternative Ausführungsform des Überrollkörpers in Form eines Profilkörpers, der in einem fahrzeugfesten Profilkörper geführt ist und an dem der Überrollkopf form- und kraftschlüssig befestigt ist,
- Figur 9: einen schematisierten Längsschnitt durch den Profil-Überrollkörper mit dem daran befestigten Überrollkopf nach Figur 8, und
- Figur 10: in zwei Figurenteilen A, B Querschnitt-Aussichten entlang der zugehörigen Schnittlinien A, B in Figur 9.

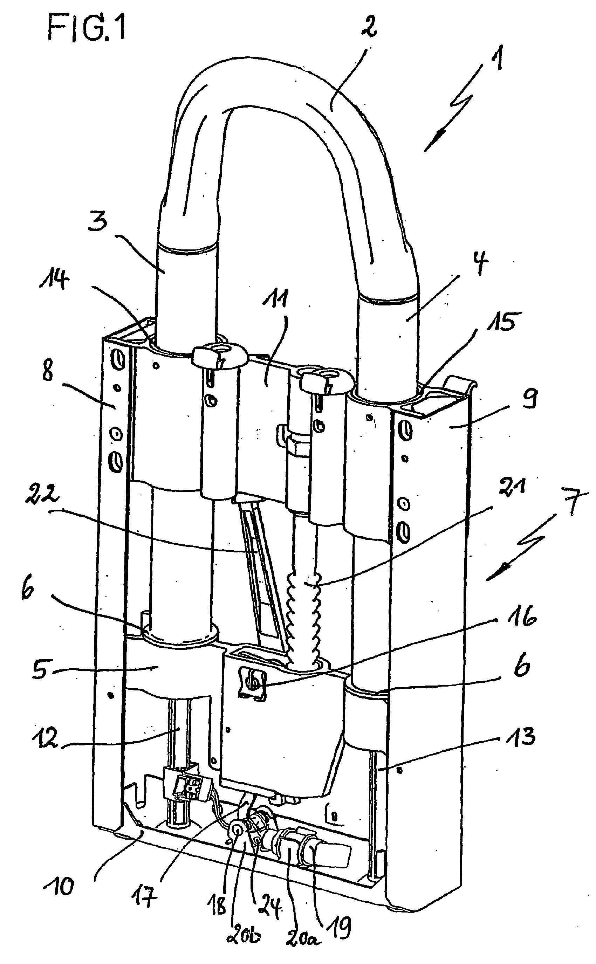

Die Figur 1 zeigt in einer perspektivischen Darstellung eine Kassettenkonstruktion eines Überrollschutzsystems für Kraftfahrzeuge, das jeweils einem Fahrzeugsitz zugeordnet ist, bei dem ein erfindungsgemäß ausgebildeter Überrollbügel vorgesehen ist. Es versteht sich, dass der erfindungsgemäße Überrollbügel auch bei anderen Überrollschutzsystemen Anwendung finden kann bzw. auch eine andere Ausbildung haben kann, z.B. in Form eines kassettenbreiten Profilkörpers mit aufgebrachtem Überrollkopf. In Figur 1 ist dabei der eingefahrene Zustand des Überrollbügels dargestellt.

In der folgenden Beschreibung der Figur 1 werden dabei der besseren Übersicht halber nur die wesentlichen Komponenten des Überrollschutzsystems angesprochen. Dieses Überrollschutzsystem weist zunächst einen U-förmigen Überrollbügel 1 auf, welcher aus drei Rohren 2, 3, 4 zusammengesetzt ist. Dabei bildet den Bügelkopf im wesentlichen ein gekrümmtes Rohr 2, welches an seinen Enden mit zwei Schenkel rohren 3, 4 durch eine form- und/oder kraftschlüssige Verbindung starr verbunden ist.

Außer zylindrischen Querschnitten für die Bügel-Schenkelrohre können aus Stabilitätsgründen auch ovale oder eckige Querschnitte gewählt werden.

Die offenen Enden der Schenkelrohre 3, 4 sind mittels einer Traverse 5 miteinander starr verbunden. Zu diesem Zweck ist die Traverse 5 als Profilkörper mit vorgegebener Höhe ausgebildet, der Bohrungen 6 zur Aufnahme der Schenkelrohre 3, 4 aufweist, in denen sie befestigt sind. Der Überrollbügel 1 ist mit seinen beiden Schenkelrohren 3, 4, die eine geschlossene Mantelfläche aufweisen und der Verbindungs-Traverse 5, in einem kassettenartigen Gehäuse 7 aufgenommen und aus- bzw. einfahrbar darin gehaltert. Dieses Gehäuse weist zwei Seitenteile 8, 9 auf, die durch einen U-förmigen Profilkörper gebildet werden, die vorzugsweise aus Metall, insbesondere aus Stahl, bestehen. Diese Seitenprofile 8, 9 sind unten über ein Bodenblechteil 10 und oben über einen fahrzeugfesten Führungsblock 11 miteinander verbunden, z.B. durch Nieten, Schrauben, Verschweißen oder dergleichen.

Im Bodenblech 10 sind zwei Federführungsbolzen 12, 13 verankert, auf denen (nicht dargestellte) vorspannbare Druckfedern zum Ausfahren des Überrollbügels 1 im Gefahrenfall, bzw. bei Handauslösung, aufgeschoben sind und die die Schenkelrohre führen.

An den Federführungsbolzen 12, 13 ist dabei jeweils mindestens ein Satz (nicht dargestellt) gespreizter Zentrierarme angebracht, vorzugsweise einstückig angeformt, die einen gleichmäßigen Abstand zwischen der zugehörigen Druckfeder und dem zugeordneten Schenkelrohr 3, 4 sichern, was sich mit Vorteil auch geräuschmindernd auswirkt.

Es ist auch denkbar, die Federführungsbolzen 12, 13 mit ebenfalls im Bodenteil 10 verankerten Standrohren mit geschlossenen Mantelflächen zu umgeben, über die die Schenkelrohre, die Standrohre übergreifend, geführt sind.

Die beiden Seitenprofile 8, 9 sind zweckmäßig, zumindest auf einer Frontseite der Kassette, mit einem Deckblech verbunden, das sich zweckmäßig, aber nicht notwendigerweise, über die gesamte Kassettenhöhe erstreckt (nicht dargestellt).

Der Führungsblock 11 besitzt zwei Führungsbohrungen 14, 15, die die Mantelfläche der Schenkelrohre 3, 4 seitlich abstützen und eine sehr weit tolerierte Führung für die sich längs der Führungsbohrungen 14, 15 bewegenden Schenkelrohre 3, 4 bieten. Am oberen, dem gekrümmten Rohr 2 zugewandten Ende der Führungsbohrungen 14, 15 ist zweckmäßig eine radiale Ansenkung oder Ringnut angelegt, welche in bekannter Weise eine ringförmige, radial elastische Führungsbuchse aufnimmt (nicht dargestellt), wodurch das radiale Spiel der Bügel-Schenkelrohre 3, 4 in den Führungsbohrungen 14, 15 ausgeglichen wird. Zusätzlich ist für die Schenkelrohre noch eine innere Führung vorgesehen, die durch die erwähnten gehäusefesten Federführungsbolzen bzw. Standrohre gewährleistet ist.

Um den Überrollbügel 1 in seiner dargestellten unteren Position, der Ruhelage, gegen die Kraft der dann vorgespannten Druckfedern halten zu können, ist an der Traverse 5 eine um eine Achse 16 gegen den Uhrzeigersinn federvorgespannte, drehbar gelagerte Halteklinke 17 mit einer hakenförmig abgebogenen Haltenase angebracht, die in Wirkeingriff mit einem im Bodenteil 10 verankerten Haltebolzen 18 bringbar ist. Bei abgesenktem Überrollbügel 1, und damit auch bei abgesenkter Traverse 5, liegt die Haltenase an dem Haltebolzen 18 an und hält den Überrollbügel 1 in der Ruhelage.

Am Bodenteil 10 ist weiterhin ein sensorgesteuertes Auslösesystem in einer Halterung 20a, 20b fest angebracht, das vorzugsweise durch ein einen Stift ausstoßendes, pyrotechnisches Auslöseelement 19 gebildet ist, das sicherer als ein üblicher Auslösemagnet die relativ hohe Auflagekraft der Halteklinke 17 an dem Haltebolzen 18 überwinden kann. In der Halterung 20a, 20b ist auch der Haltebolzen 18 gelagert, der zugleich eine Welle für eine verschwenkbare Wippe 24 darstellt, die einen über Wangen abgekröpften Verbindungsschenkel besitzt, der zwischen der Stirnseite des Stiftes des Auslöseelementes und der Stirnseite der Nase der Halteklinke 17 liegt, d.h. als bewegliches Distanzstück den Raum zwischen Stift und Haltebolzen 18 überbrückt.

An dem Führungsblock 11 ist ein Rastdorn 21 befestigt, der in der oberen Stellung mit einer Verriegelungsklinke, die in der Traverse 5 ebenfalls um die Welle 16 schwenkbar angelenkt ist, verriegelnd in Wirkeingriff bringbar ist, um ein ungewolltes Eindrücken des Überrollbügels in einer ausgefahrenen Position zu verhindern.

In der Traverse 5 ist weiterhin, ebenfalls um die Welle 16 schwenkbar, ein Entriegelungshebel 22 angelenkt, der Steuerfunktionen hat, da er über seitliche Abstellungen sowohl auf die hakenförmige Halteklinke 17 als auch auf die Verriegelungsklinke einwirken kann.

Im Aktivierungsfall stößt der Stift des pyrotechnischen Auslösesystems 19 über den abgekröpften Verbindungsschenkel der Wippe 24 die Nase der Halteklinke 17 aus dem Wirkeingriff mit dem Haltebolzen 18 und gibt damit den Überrollbügel 1 frei, der, samt der Traverse 5, angetrieben von den Druckfedern, in seine obere Position fährt. Während dieser Aufstellbewegung ratscht die in der bewegten Traverse 5 gehalterte Verriegelungsklinke über die Verzahnung des an dem Führungsblock 11 fahrzeugfest angebrachten Rastdornes 21 und verriegelt in der oberen Stellung ein Wiedereinfahren.

Nach einer gewollten Auslösung, insbesondere zu Testzwecken bei der Fertigung und bei betrieblichen Inspektionen im Fahrbetrieb, muss der Überrollbügel, hier manuell, wieder selbsttätig in die Ruhelage nach Figur 1 reversiert werden können, d.h. die federvorgespannte Halteklinke 17 muss wieder selbsttätig am Haltebolzen 18 einrasten können. Dies ist durch die dargestellte Konstruktion mittels der Wippe 24 möglich.

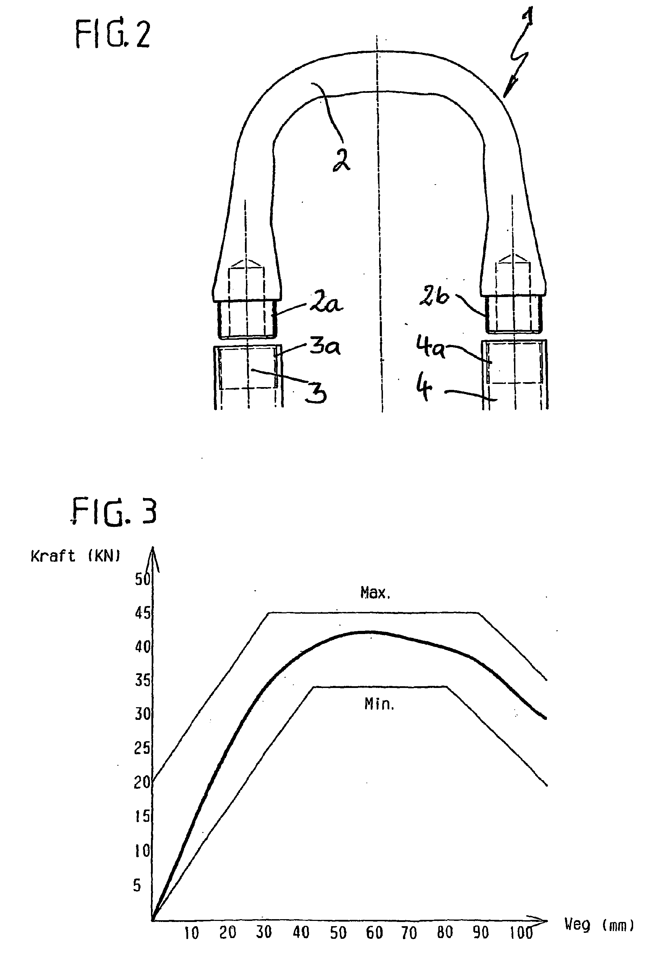

Die Fig. 2 zeigt in einer Art Explosionsdarstellung eines Ausschnittes der Fig. 1 eine erste Ausführungsform der erfindungsgemäßen Ausbildung des dreiteiligen Überrollbügels mit dem kompletten Bügelkopf 2 und den Verbindungsenden der Schenkelrohre 3, 4. Der Bügelkopf 2 ist in diesem Beispiel als massives gebogenes Schmiedeteil ausgebildet, und besitzt an den Verbindungsenden jeweils ein Außengewinde 2 a bzw. 2 b. In entsprechender Weise besitzen die Verbindungsenden der metallischen Schenkelrohre 3, 4 ein Innengewinde 3 a bzw. 4 a, das jeweils mit dem Außengewinde 2a bzw. 2 b des zugehörigen Verbindungsende des Bügelkopfes 2 bündig verschraubbar ist.

Die Ausbildung kann auch so getroffen sein, dass die Verbindungsenden der Schenkelrohre 3, 4 ein Außengewinde und die Verbindungsenden des Bügelkopfes 2 ein Innengewinde besitzen.

Wie eingangs erwähnt, können die Schenkelrohre 3, 4 aus Aluminium oder Stahl, aber auch aus einem faserverstärkten Kunststoff bestehen, bzw. der Bügelkopf 2 kann anstelle eines Schmiedeteiles auch ein gebogenes Stahl- oder Alumiumrohr oder faserverstärktes Kunststoffteil sein. Dadurch, dass die Bügelkomponenten und der Bügelkopf aus unterschiedlichen Werkstoffen bestehen können sowie der Bügelkopf nach unterschiedlichen Fertigungsverfahren hergestellt und ausgebildet werden kann, gelingt es, wie im Weg-/Kraft-Diagramm in Fig. 3 dargestellt, für den Überrollbügel einen Kraft/Weg-Verlauf vorzugeben (durchgehende Linie), der zwischen einer maximalen und minimalen Sollkurve liegt und insoweit eine sichere Funktionsweise des Überrollschutzsystems im Überschlagsfall gewährleistet.

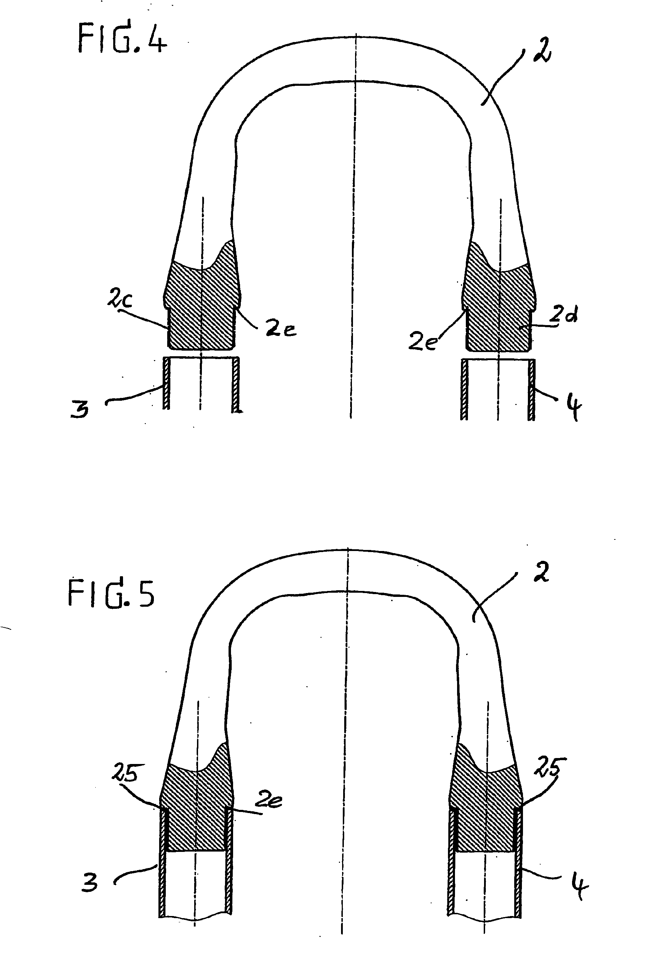

Die Fig. 4 zeigt in einer Art Explosionsdarstellung eines Ausschnittes der Fig. 1 eine weitere Ausbildung des dreiteiligen Überrollbügels, mit dem kompletten Bügelkopf 2 und lediglich den Verbindungsenden der Schenkelrohre 3, 4. Der Bügelkopf 2 ist in diesem Beispiel ebenfalls als massives gebogenes Schmiedeteil ausgebildet und besitzt an jedem Verbindungsende einen Abschnitt 2c bzw. 2d mit vermindertem Durchmesser, der an den Innendurchmesser der Schenkelrohre 3, 4 angepasst ist, und Anschläge 2e bildet.

Zum Verbinden des Bügelkopfes 2 mit den Schenkelrohren 3, 4 wird auf die Verbindungsabschnitte 2c, 2d ein Klebstoff aufgetragen, die danach unter Bildung einer Klebenaht 25 in die Schenkelrohre 3, 4 bis zu den Anschlägen 2e eingeschoben werden.

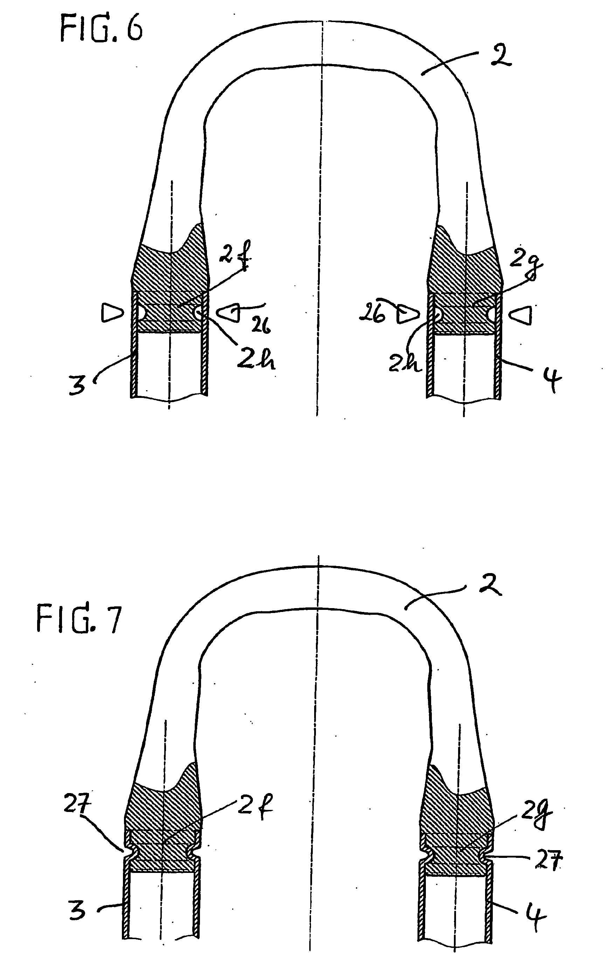

Dieser Zustand ist in Figur 5 dargestellt.

Es können ein- oder mehrkomponentige Kleber, angepasst an die jeweilig zu verbindenden Werkstoffe, vorzugsweise ein Cyanolit-Kleber verwendet werden. Auch bei dieser Ausführungsform mit verklebten Komponenten gelingt es entsprechend dem Weg-/Kraft-Diagramm in Fig. 3, für den Überrollbügel einen Kraft/Weg-Verlauf vorzugeben (durchgehende Linie), der zwischen einer maximalen und minimalen Sollkurve liegt und insoweit eine sichere Funktionsweise des Überrollschutzsystems im Überschlagsfall gewährleistet.

In den Figuren 6 und 7 ist eine weitere Ausgestaltung der Erfindung dargestellt, bei welcher der U-förmige Überrollbügel aus drei Komponenten formschlüssig zusammengefügt ist.

Die Fig. 6 zeigt in einem Ausschnitt aus der Fig. 1 die weitere Ausbildung des dreiteiligen Überrollbügels mit dem kompletten Bügelkopf 2 und lediglich den Verbindungsenden der Schenkelrohre 3, 4. Der Bügelkopf 2 ist in diesem Beispiel ebenfalls als massives gebogenes Schmiedeteil ausgebildet, und besitzt an den Verbindungsenden 2f, 2g jeweils eine umlaufende rillenförmige Nut 2h.

Unter Anwendung eines symbolisch dargestellten Werkzeuges 26 werden die Verbindungsenden der Schenkelrohre 3, 4 im Nutbereich zu einer formschlüssigen Verbindung 27 mit dem Bügelkopf 2 verformt. Dieser Zustand ist in Fig. 7 dargestellt.

In der Figur 7 ist ein rillenförmiger Formschluss dargestellt. Es versteht sich für den Fachmann, dass auch andere Konfigurationen möglich sind.

Auch mit der formschlüssigen Verbindung nach den Figuren 6, 7 lässt sich ein optimierter Kraft/Weg-Verlauf entsprechend dem Diagramm nach Fig. 3 vorgeben.

In den Figuren 1 bis 7 ist jeweils ein U-förmiger Überrollbügel als Überrollkörper dargestellt, bei dem der Basiskörper aus zwei Schenkelrohren 3, 4, die an einem Ende über einen gerundeten Überrollkopf 2 mechanisch starr miteinander verbunden sind, besteht.

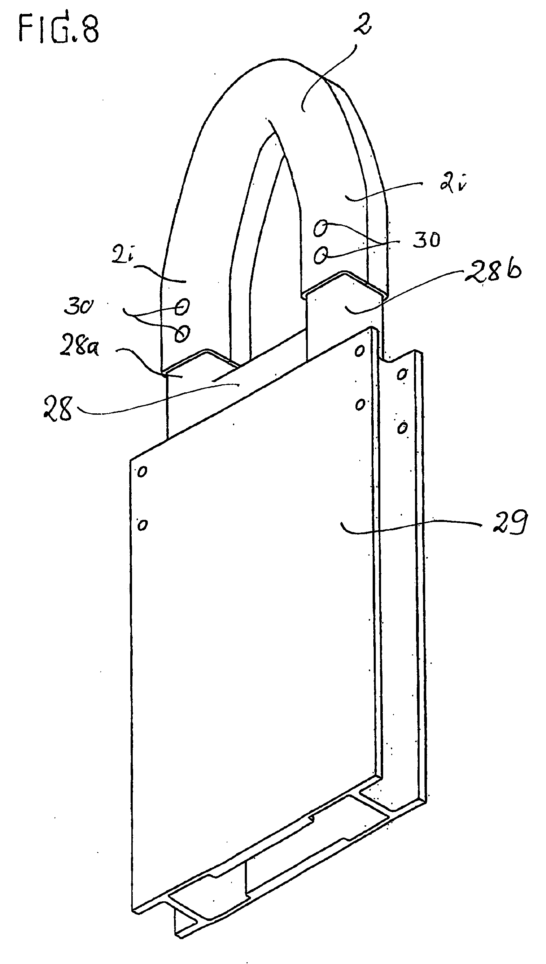

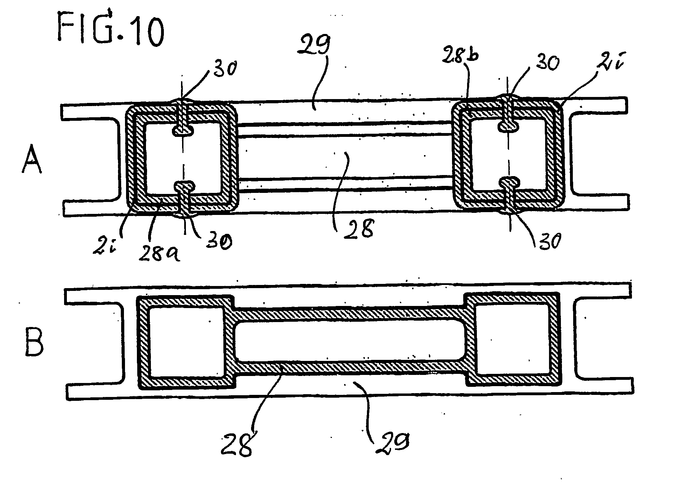

In den Figuren 8 bis 10 ist ein alternativer Überrollkörper dargestellt, bei dem der Basiskörper aus einem breiten Profilkörper 28 besteht, der in einem fahrzeugfest angebrachten weiteren Profilkörper 29 geführt ist und auf dem kopfseitig der gerundete Überrollkopf 2 befestigt ist. Diesen alternativen Profil-Überrollkörper zeigt die eingangs zitierte DE 198 38 989 C1.

Die Profilkörper 28, 29 bestehen vorzugsweise aus Aluminium-Stangpressprofilen, wogegen der Bügelkopf 2 vorzugsweise aus einem glas- oder kohlefaser-verstärktem Kunststoff besteht, aber auch metallisch ausgebildet sein kann.

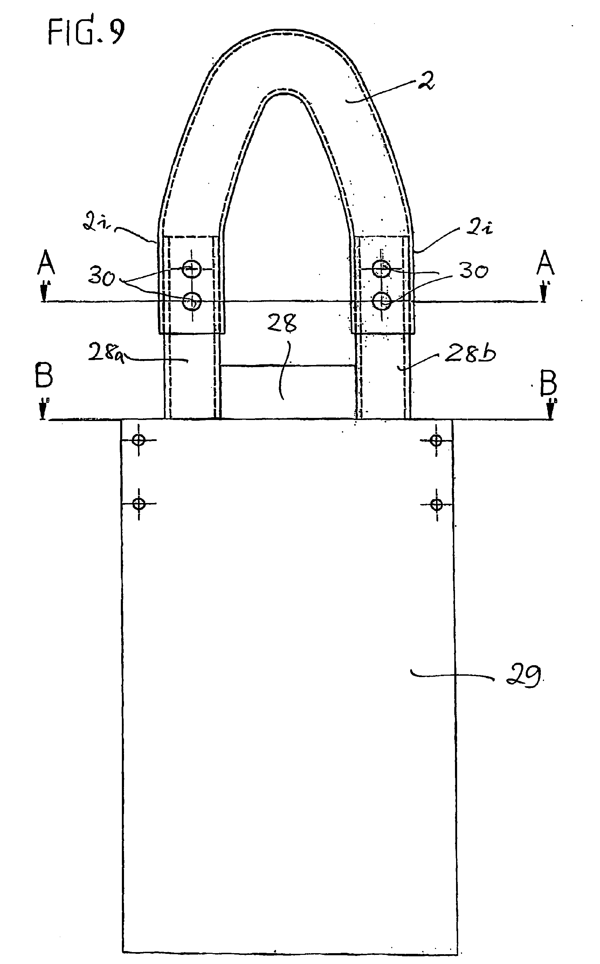

Der geführte Profilkörper 28 weist zwei quadratisch geformte Ausschlussstutzen 28a, 28b auf, die in komplementären Ausnehmungen in den Schenkeln 2i des Bügelkopfes 2 auf einer vorgegebenen Länge formschlüssig aufgenommen sind (Fig. 9). Zusätzlich sind die Schenkeln 2i mit den Ausschlussstutzen mittels Blindnieten 30 und/oder durch Kleber mechanisch verbunden.

## Patentansprüche

1. Überrollschutzsystem für Kraftfahrzeuge, das jeweils einem Fahrzeugsitz zugeordnet ist, mit einem aufstellbaren, U-förmigen Überrollbügel (1), der als Basiskörper zwei geführte Schenkelrohre (3, 4) und einen damit starr verbundenen separaten U-förmig gerundeten Bügelkopf (2) aufweist, wobei Basiskörper (3, 4) und Bügelkopf (2) aus verschiedenen Werkstoffen für eine vorgegebene Festigkeit und Deformierbarkeit des Überrollbügels (1) bestehen und die Werkstoffe so gewählt sind, dass starre, d.h. feste und wenig elastische, Basiskörper (3, 4) mit einem definiert verformbaren, d.h. nachgiebigen, Bügelkopf (2), verbunden sind und wobei die Verbindungsenden der Schenkelrohre (3, 4) einerseits und die des U-förmig gerundeten Bügelkopfes (2) andererseits direkt stirnseitig form- und/oder kraftschlüssig fluchtend miteinander verbunden sind.

2. Überrollschutzsystem für Kraftfahrzeuge, das jeweils einem Fahrzeugsitz zugeordnet ist, mit einem aufstellbaren Überrollkörper (2, 28), der einen geführten Basiskörper (28) und einen damit mittels seiner Schenkel (2i) starr verbundenen separaten gerundeten Bügelkopf (2) aufweist, wobei Basiskörper und Bügelkopf (2) aus verschiedenen Werkstoffen für eine vorgegebene Festigkeit und Deformierbarkeit des Überrollbügels (1) bestehen und die Werkstoffe so gewählt sind, dass ein starrer, d.h. fester und wenig elastischer, Basiskörper (28) mit einem definiert verformbaren, d.h. nachgiebigen, Bügelkopf (2), verbunden ist und wobei der Basiskörper, gebildet durch einen breiten Profilkörper (28), auf der dem Bügelkopf (2) zugewandten Seite zwei beabstandete Anschlußstutzen (28 a, 28 b) aufweist, und die Verbindungsenden der Schenkel (2 i) des Bügelkopfes (2) mit den Anschlußstutzen (28 a, 28 b) form- und/oder kraftschlüssig fluchtend miteinander verbunden sind.

3. Überrollschutzsystem nach Anspruch 1 oder 2, **dadurch gekennzeichnet, dass** Bügelkopf (2) und Basiskörper (3, 4) aus unterschiedlichen Werkstoffen bestehen.

4. Überrollschutzsystem nach Anspruch 3, **dadurch gekennzeichnet, dass** der Basiskörper (3, 4) aus Stahl oder Aluminium besteht.

5. Überrollschutzsystem nach Anspruch 3, **dadurch gekennzeichnet, dass** der Basiskörper aus einem faserverstärkten Kunststoff besteht.

6. Überrollschutzsystem nach einem der Ansprüche 3 bis 5, **dadurch gekennzeichnet, dass** der Bügelkopf (2) aus einem gebogenen Stahl- oder Aluminiumrohr besteht.

7. Überroltschutzsystem nach einem der Ansprüche 3 bis 5, **dadurch gekennzeichnet, dass** der Bügelkopf (2) als Druckguss- oder Schmiedeteil ausgebildet ist.

8. Überrollschutzsystem nach einem der Ansprüche 3 bis 5, **dadurch gekennzeichnet, dass** der Bügelkopf als faserverstärktes Kunststoffteil ausgebildet ist.

9. Überrollschutzsystem nach Anspruch 1 oder einem der Ansprüche 3 bis 8, **dadurch gekennzeichnet, dass** die Verbindungsstellen der Enden der Schenkelrohre (3, 4) einerseits und die des gerundeten Bügelkopfes (2) andererseits zueinander komplementäre Gewindeausbildungen aufweisen, über welche die Enden der Schenkelrohre (3,4) direkt stirnseitig mit den Verbindungsenden des gerundeten Bügelkopfes (2) miteinander verschraubt sind.

10. Überrollschutzsystem nach Anspruch 9, **dadurch gekennzeichnet, dass** die Verbindungsenden der Schenkelrohre (3, 4) ein Innengewinde (3 a, 4 a) und die Verbindungsstellen am Bügelkopf (2) ein dazu komplementäres Außengewinde (2 a, b) aufweisen.

11. Überrollschutzsystem nach Anspruch 9, **dadurch gekennzeichnet, dass** an den Verbindungs-Enden der Schenkelrohre (3, 4) jeweils ein Außengewinde oder ein Gewindezapfen mit einem Durchmesser kleiner als der der Schenkelrohre angebracht ist und die Verbindungsstellen am Bügelkopf (2) jeweils ein komplementäres Innengewinde bzw. eine zum Gewindezapfen komplementäre Gewindebohrung aufweisen.

12. Überrollschutzsystem nach Anspruch 1 oder 2, oder einem der Ansprüche 3 bis 8, **dadurch gekennzeichnet, dass** der Bügelkopf (2) mit dem Basiskörper (3, 4; 28) verklebt ist.

13. Überrollschutzsystem nach Ansprüchen 12 und 1, **dadurch gekennzeichnet, dass** die Verbindungsenden der Schenkelrohre (3, 4) jeweils mit dem Bügelkopf (2) über zugehörige Verbindungsstellen verklebt sind.

14. Überrollschutzsystem nach Anspruch 13, **dadurch gekennzeichnet, dass** die Verbindungsenden des Bügelkopfes (2) jeweils einen Verbindungsabschnitt (2a, b) mit einem Außendurchmesser angepasst an den Innendurchmesser der Schenkelrohre (3, 4) aufweisen und mit diesem Abschnitt vollständig in die Schenkelrohre eingeschoben darin verklebt sind.

15. Überrollschutzsystem nach einem der Ansprüche 12 bis 14, **dadurch gekennzeichnet, dass** als Klebstoff ein Cyanolit-Kleber vorgesehen ist.

16. Überrollschutzsystem nach Anspruch 1 oder 2 oder einem der Ansprüche 3 bis 8, **dadurch gekennzeichnet, dass** der Bügelkopf (2) mit dem Basiskörper (3, 4; 28) formschlüssig verbunden ist.

17. Überrollschutzsystem nach Ansprüchen 16 und 1, **dadurch gekennzeichnet, dass** die Verbindungsenden der Schenkelrohre (3, 4) jeweils mit dem Bügelkopf (2) über zugehörige Verbindungsstellen formschlüssig verbunden sind.

18. Überrollschutzsystem nach Anspruch 17, **dadurch gekennzeichnet, dass** die Verbindungsstellen (2a, b) am Bügelkopf (2) eine umlaufende Nut (2h) aufweisen, in welche die Wandung der Verbindungsenden unter Schaffung eines Formschlusses eingeprägt ist.

19. Überrollschutzsystem nach Anspruch 18, **dadurch gekennzeichnet, dass** die Nut (2h) rillenförmig ausgebildet ist.

20. Überrollschutzsystem nach Anspruch 1 oder 2, **dadurch gekennzeichnet, dass** der Bügelkopf (2) mit dem Basiskörper (3, 4; 28) sowohl verklebt als auch formschlüssig verbunden ist.

21. Überrollschutzsystem nach Anspruch 17 oder 20 und Anspruch 2, **dadurch gekennzeichnet, dass** quadratisch geformte Anschlußstutzen (28a, 28b) des Profilkörpers (28) in komplementären Ausnehmungen in den Schenkeln des Bügelkopfes (2) auf einer vorgegebenen Länge formschlüssig aufgenommen sind.

## Claims

1. Rollover protection system for motor vehicles, which is in each case associated with one vehicle seat, with an erectable, U-shaped rollover bar (1), which as base members has two guided tubular legs (3, 4) and a separate bar head (2) of rounded U-shape rigidly connected thereto, wherein the base members (3, 4) and the bar head (2) are composed of different materials for a predefined strength and deformability of the rollover bar (1) and the materials are selected so that rigid, that is to say strong and inelastic base members (3, 4) are connected to a pliable bar head (2) of defined deformability, and wherein the connecting ends of the tubular legs (3, 4) on the one hand and those of the bar head (2) of rounded U-shape on the other are directly at their end faces positively and/or non-positively connected in alignment with one another.

2. Rollover protection system for motor vehicles, which is in each case associated with one vehicle seat, with an erectable, rollover member (2, 28), which has a guided base member (28) and a separate rounded bar head (2) rigidly connected thereto by means of a leg (2i), wherein the base member and the bar head (2) are composed of different materials for a predefined strength and deformability of the rollover bar (1) and the materials are selected so that a rigid, that is to say strong and inelastic base member (28) is connected to a pliable bar head (2) of defined deformability, and wherein the base member, formed by a broad profiled member (28), on the side facing the bar head (2) has two spaced connecting pieces (28a, 28b), and the connecting ends of the legs (2i) of the bar head (2) are positively and/or non-positively connected to the connecting pieces (28a, 28b) in alignment with one another.

3. Rollover protection system according to Claim 1 or 2, **characterized in that** the bar (2) and the base members (3, 4) are composed of different materials.

4. Rollover protection system according to Claim 3, **characterized in that** the base member (3, 4) is composed of steel or aluminium.

5. Rollover protection system according to Claim 3, **characterized in that** the base member is composed of a fibre-reinforced plastic.

6. Rollover protection system according to any one of Claims 3 to 5, **characterized in that** the bar head (2) is composed of a bent steel or aluminium tube.

7. Rollover protection system according to any one of Claims 3 to 5, **characterized in that** the bar head (2) is formed as a die cast or forged part.

8. Rollover protection system according to any one of Claims 3 to 5, **characterized in that** the bar head is formed as a fibre-reinforced plastic part.

9. Rollover protection system according to Claim 1 or any one of Claims 3 to 8, **characterized in that** the joints at the ends of the tubular legs (3, 4) on the one hand and those of the rounded bar had (2) on the other have complementary threads, by means of which the ends of the tubular legs (3, 4) are directly at the end faces screwed together with the connecting ends of the rounded bar head (2).

10. Rollover protection system according to Claim 9, **characterized in that** the connecting ends of the tubular legs (3, 4) have an internal thread (3a, 4a) and the joints on the bar head (2) have a complementary external thread, (2a, 2b).

11. Rollover protection system according to Claim 9, **characterized in that** an external thread or a threaded spigot having a diameter smaller than that of the tubular legs is fitted to each of the connecting ends of the tubular legs (3, 4) and the joints on the bar head (2) each have a complementary internal thread or a complementary threaded hole to the threaded spigot.

12. Rollover protection system according to Claim 1 or 2 or any one of Claims 3 to 8, **characterized in that** the bar head (2) is adhesively bonded to the base member (3, 4; 28).

13. Rollover protection system according to Claims 12 and 1, **characterized in that** the connecting ends of the tubular legs (3, 4) are each adhesively bonded to the bar head (2) via associated joints.

14. Rollover protection system according to Claim 13, **characterized in that** the connecting ends of the bar head (2) each have a connecting section (2a, 2b) having an outside diameter matched to the inside diameter of the tubular legs (3, 4) and with this section pushed fully into the tubular legs are adhesively bonded therein.

15. Rollover protection system according to any one of Claims 12 to 14, **characterized in that** a Cyanolit adhesive is provided as adhesive.

16. Rollover protection system according to Claim 1 or 2 any one of Claims 3 to 8, **characterized in that** the bar head (2) is connected to the base member (3, 4; 28) by means of a positive interlocking connection.

17. Rollover protection system according to Claims 16 and 1, **characterized in that** the connecting ends of the tubular legs (3, 4) are each positively connected to the bar head (2) by associated joints.

18. Rollover protection system according to Claim 17, **characterized in that** the joints (2a, 2b) on the bar head (2) have a circumferential slot (2h), into which the wall of the connecting ends is impressed, creating a positive interlock.

19. Rollover protection system according to Claim 18, **characterized in that** the slot (2h) is of grooved design shape.

20. Rollover protection system according to Claim 1 or 2, **characterized in that** the bar head (2) is both adhesively bonded and positively connected to the base member (3, 4; 28).

21. Rollover protection system according to Claim 17 or 20 and Claim 2, **characterized in that** square-shaped connecting pieces (28a, 28b) of the profiled member (28) are received to a predefined length, forming a positive interlock in complementary recesses in the legs of the bar head (2).

## Revendications

1. Système de protection anticapotage pour véhicules automobiles qui est chaque fois affecté à un siège du véhicule, avec un arceau de sécurité (1) en forme de U relevable qui présente comme corps de base deux tubes coudés (3, 4) guidés et une tête d'arceau (2) arrondie en forme de U séparée reliée à ces derniers, étant donné que le corps de base (3, 4) et la tête d'arceau (2) sont fabriqués en matériaux différents pour une stabilité et une déformabilité différentes de l'arceau de sécurité (1) et les matériaux sont choisis de manière à ce que des corps de base (3, 4) rigides, c'est-à-dire solides et peu élastiques soient reliés à une tête d'arceau (2) déformable de façon définie, c'est-à-dire flexibles, et étant donné que les extrémités de jonction des tubes coudés (3, 4) d'une part et celles de la tête d'arceau (2) arrondie en forme de U d'autre part sont reliées directement sur les faces terminales l'une avec l'autre en alignement précis par forme et/ou par adhérence.

2. Système de protection anticapotage pour véhicules automobiles qui est chaque fois affecté à un siège du véhicule, avec un corps anticapotage (2, 28) relevable qui présente un corps de base (28) guidé et une tête d'arceau (2) arrondie en forme de U séparée reliée de manière rigide à ce dernier au moyen de ses branches (2i), étant donné que le corps de base et la tête d'arceau (2) sont fabriqués en matériaux différents pour une stabilité et une déformabilité différentes de l'arceau de sécurité (1) et les matériaux sont choisis de manière à ce qu'un corps de base (28) rigide, c'est-à-dire solide et peu élastique est relié à une tête d'arceau (2) déformable de façon définie, c'est-à-dire flexible, et étant donné que le corps de base qui est formé par un large corps profilé (28) présente sur le côté orienté vers la tête d'arceau (2) deux ajutages de raccordement (28 a, 28 b) écartés l'un de l'autre, et les extrémités de jonction des branches (2 i) de la tête d'arceau (2) sont reliées avec les ajutages de raccordement (28 a, 28 b) l'une avec l'autre en alignement précis par forme et/ou par adhérence.

3. Système de protection anticapotage selon la revendication 1 ou 2, **caractérisé en ce que** la tête d'arceau (2) et le corps de base (3, 4) sont fabriqués en matériaux différents.

4. Système de protection anticapotage selon la revendication 3, **caractérisé en ce que** le corps de base (3, 4) est fabriqué en acier ou en aluminium.

5. Système de protection anticapotage selon la revendication 3, **caractérisé en ce que** le corps de base (3, 4) est fabriqué en une matière plastique renforcée par fibres.

6. Système de protection anticapotage selon l'une des revendications 3 à 5, **caractérisé en ce que** la tête d'arceau (2) est fabriquée en un tube d'acier ou d'aluminium courbé.

7. Système de protection anticapotage selon l'une des revendications 3 à 5, **caractérisé en ce que** la tête d'arceau (2) est formée comme pièce coulée sous pression ou forgée.

8. Système de protection anticapotage selon l'une des revendications 3 à 5, **caractérisé en ce que** la tête d'arceau (2) est formée comme pièce plastique renforcée par fibres.

9. Système de protection anticapotage selon la revendication 1 ou l'une quelconque des revendications 3 à 8, **caractérisé en ce que** les points de jonction des extrémités des tubes coudés (3, 4) d'une part et ceux de la tête d'arceau (2) arrondie d'autre part présente des formations filetées complémentaires l'une par rapport à l'autre par l'intermédiaire desquelles les extrémités des tubes coudés (3, 4) sont directement vissées sur les faces terminales avec les extrémités de jonction de la tête d'arceau (2) arrondie.

10. Système de protection anticapotage selon la revendication 9, **caractérisé en ce que** les extrémités de jonction des tubes coudés (3, 4) présentent un filetage intérieur (3 a, 4 a) et les points de jonction présentent sur la tête d'arceau (2) un filetage extérieur (2 a, b) complémentaire à ce dernier.

11. Système de protection anticapotage selon la revendication 9, **caractérisé en ce que** sont présents à chacune des extrémités de jonction des tubes coudés (3, 4) un filetage extérieur ou un tourillon fileté de diamètre inférieur à celui des tubes coudés et les points de jonction présentent sur la tête d'arceau (2) un filetage intérieur complémentaire ou un alésage fileté complémentaire au tourillon fileté.

12. Système de protection anticapotage selon la revendication 1 ou 2 ou l'une quelconque des revendications 3 à 8, **caractérisé en ce que** la tête d'arceau (2) est collée avec le corps de base (3, 4 ; 28).

13. Système de protection anticapotage selon les revendications 12 et 1, **caractérisé en ce que** les extrémités de jonction des tubes coudés (3, 4) sont collées chacune avec la tête d'arceau (2) par l'intermédiaire de points de jonction correspondants.

14. Système de protection anticapotage selon la revendication 13, **caractérisé en ce que** les extrémités de jonction de la tête d'arceau (2) présentent chacune une section de jonction (2a, b) avec un diamètre extérieur adapté au diamètre intérieur des tubes coudés (3, 4) et, insérés complètement dans les tubes coudés, y sont collés avec cette section.

15. Système de protection anticapotage selon l'une des revendications 12 à 14, **caractérisé en ce qu'**est prévue comme colle une colle cyanolite.

16. Système de protection anticapotage selon la revendication 1 ou 2 ou l'une quelconque des revendications 3 à 8, **caractérisé en ce que** la tête d'arceau (2) est assemblée par forme avec le corps de base (3, 4 ; 28).

17. Système de protection anticapotage selon les revendications 16 et 1, **caractérisé en ce que** les extrémités de jonction des tubes coudés (3, 4) sont chacune assemblées par forme avec la tête d'arceau (2) par l'intermédiaire de points de jonction correspondants.

18. Système de protection anticapotage selon la revendication 17, **caractérisé en ce que** les points de jonction (2a, b) sur la tête d'arceau (2) présentent une rainure circonférentielle (2h) dans laquelle la paroi des extrémités de jonction est empreinte avec réalisation d'un assemblage par forme.

19. Système de protection anticapotage selon la revendication 18, **caractérisé en ce que** la rainure (2h) a la forme d'une gorge.

20. Système de protection anticapotage selon la revendication 1 ou 2, **caractérisé en ce que** la tête d'arceau (2) est aussi bien collée qu'assemblée par forme avec le corps de base (3, 4 ; 28).

21. Système de protection anticapotage selon la revendication 17 ou 20 et la revendication 2, **caractérisé en ce que** des ajutages de raccordement (28a" 28b) de forme carrée du corps profilé (28) sont logés dans des évidements complémentaires dans les branches de la tête d'arceau (2) par forme sur une longueur prescrite.
